# EUROPEAN PATENT SPECIFICATION

(11) **EP 4 046 351 B1**
(45) Date of publication and mention of the grant of the patent: **14.02.2024**
(21) Application number: 19791372.6
(22) Date of filing: 14.10.2019
(51) Int. Cl.: H04L 67/51, H04L 69/00, H04L 65/1069

(54) **RTPS DISCOVERY IN KUBERNETES**
RTPS-AUFFINDUNG IN KUBERNETZ
DÉCOUVERTE DE RTPS DANS KUBERNETES

(43) Date of publication of application: 24.08.2022
(73) Proprietor: Telefonaktiebolaget LM Ericsson (publ), 164 83 Stockholm (SE)
(72) Inventor: JOCHA, Dávid, 1022 Budapest (HU); GERÖ, Balázs Peter, 1095 Budapest (HU); KERN, András, 1118 Budapest (HU)
(74) Representative: Ericsson
(86) International application number: PCT/IB2019/058751
(87) International publication number: WO 2021/074668

(56) References cited:
- EP-A1- 2 849 135
- US-A1- 2015 026 258
- Omg Object Management Group: "The Real-time Publish-Subscribe Wire Protocol DDS Interoperability Wire Protocol Specification (DDS-RTPS)", , 1 November 2010 (2010-11-01), pages 1-198, XP055526263, Retrieved from the Internet: URL:http://www.omg.org/spec/DDS-RTPS/20080 601 [retrieved on 2018-11-22]

## Description

### TECHNICAL FIELD

Embodiments of the invention relate to the field of communication in virtualized computing environments; and more specifically, to the enabling discovery of real-time publish-subscribe protocol (RTPS) participants in virtualized computing environments that do not support multicast.

### BACKGROUND ART

Data Distribution Service (DDS) is a networking middleware for real-time systems in an Object Management Group (OMG) standard. DDS is widely utilized in the defense and aerospace industries. DDS simplifies networking and provides a publish-subscribe paradigm for exchanging data including events and commands amongst participating nodes. Nodes that generate data are referred to as 'publishers' and nodes that consume this data are referred to as 'subscribers.' The publisher nodes create 'topics' and publish 'samples' that are delivered to subscribers that have declared an 'interest' in the topic.

Real-time publish subscribe (RTPS) protocol is a protocol for best effort and reliable publisher and subscriber communication over unreliable transport mechanisms such as user datagram protocol (UDP) that utilizes both unicast and multicast communication. The RTPS discovery module is the aspect of DDS and RTPS that enables the participating nodes (referred to herein as the 'participants') to obtain information about the existence and attributes of all the other participants and endpoints in a DDS domain. Unicast communication is one to one communication between endpoints. Multicast (or broadcast) communication is a one to many communication between endpoints. RTPS relies on multicast communication during discovery. Meta-traffic about participants is exchanged to enable every participant to obtain a complete picture of all of the participants (and their publishers and subscribers) in a given DDS domain. The exchanged meta-traffic also enables the configuration of the local publishers to communicate with the remote subscribers and the local subscribers to communicate with the remote publishers.

DDS and RTPS can be used in combination with other technologies such as the robot operating system (ROS) (e.g., ROS v2), Kubernetes, Envoy, Routing Service (by Real-Time Innovations), and similar technologies. ROS v2 is a flexible framework for writing robot software that is built on RTPS. Kubernetes (K8s) is cloud computing environment that is an open-source system for automating deployment, scaling, and management of containerized applications that is widely used in information technology (IT) industries. Envoy is an open source edge and service proxy, designed for cloud-native applications. RTI's Routing Service (aka "RTPS proxy") is a technology to scale and integrate DDS systems across multiple platforms, systems and networks. However, in some instances these technologies may be combined into a cloud computing environment where support for multicast and broadcast is not guaranteed. In these cloud computing environments RTPS cannot reliably discover all participants in a DDS domain.

### SUMMARY

In one embodiment, a method is implemented by an electronic device to enable discovery in a virtual execution environment that does not support multicast, as disclosed by claim 1.

In another embodiment, an electronic device implements the method to enable discovery in a virtual execution environment that does not support multicast, as disclosed by claim 9.

In further embodiments, a computer-readable medium stores instructions to enable discovery in a virtual execution environment that does not support multicast, as disclosed by claim 8.

More embodiments are disclosed by the dependent claims 2-7.

### BRIEF DESCRIPTION OF THE DRAWINGS

The invention may best be understood by referring to the following description and accompanying drawings that are used to illustrate embodiments of the invention. In the drawings:
Figure 1A is a diagram of one example embodiment of a DDS domain including nodes that are not implemented in a cloud computing environment.
Figure 1B is a diagram of another example embodiment of DDS domain that includes nodes that are implemented in a cloud computing environment.
Figure 2 is a diagram of a set of participants communicating with a RTPS discovery replicator.
Figure 3 is a diagram of one embodiment of the components of a discovery replicator.
Figure 4 is a flowchart of one embodiment the process of the discovery replicator.
Figures 5A-D are flowcharts of a set of example implementations of the participant list updater.
Figure 5E is a diagram of the further operation of the participant list updater.
Figure 6 is a diagram of one embodiment the operation of the replication process.
Figure 7A illustrates connectivity between network devices (NDs) within an exemplary network, as well as three exemplary implementations of the NDs, according to some embodiments of the invention.
Figure 7B illustrates an exemplary way to implement a special-purpose network device according to some embodiments of the invention.
Figure 7C illustrates various exemplary ways in which virtual network elements (VNEs) may be coupled according to some embodiments of the invention.
Figure 7D illustrates a network with a single network element (NE) on each of the NDs, and within this straight forward approach contrasts a traditional distributed approach (commonly used by traditional routers) with a centralized approach for maintaining reachability and forwarding information (also called network control), according to some embodiments of the invention.
Figure 7E illustrates the simple case of where each of the NDs implements a single NE, but a centralized control plane has abstracted multiple of the NEs in different NDs into (to represent) a single NE in one of the virtual network(s), according to some embodiments of the invention.
Figure 7F illustrates a case where multiple VNEs are implemented on different NDs and are coupled to each other, and where a centralized control plane has abstracted these multiple VNEs such that they appear as a single VNE within one of the virtual networks, according to some embodiments of the invention.
Figure 8 illustrates a general purpose control plane device with centralized control plane (CCP) software 850), according to some embodiments of the invention.
Figure 9 is a diagram illustrating an example embodiment of an electronic device implementing a discovery replicator in a virtualized execution environment.

### DETAILED DESCRIPTION

The following description describes methods and apparatus for enabling (RTPS) to operating in a virtualized computing environment such as a cloud computing environment where multicast and/or broadcast are not available. In the following description, numerous specific details such as logic implementations, opcodes, means to specify operands, resource partitioning/sharing/duplication implementations, types and interrelationships of system components, and logic partitioning/integration choices are set forth in order to provide a more thorough understanding of the present invention. It will be appreciated, however, by one skilled in the art that the invention may be practiced without such specific details. In other instances, control structures, gate level circuits and full software instruction sequences have not been shown in detail in order not to obscure the invention. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Bracketed text and blocks with dashed borders (e.g., large dashes, small dashes, dotdash, and dots) may be used herein to illustrate optional operations that add additional features to embodiments of the invention. However, such notation should not be taken to mean that these are the only options or optional operations, and/or that blocks with solid borders are not optional in certain embodiments of the invention.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

An electronic device stores and transmits (internally and/or with other electronic devices over a network) code (which is composed of software instructions and which is sometimes referred to as computer program code or a computer program) and/or data using machine-readable media (also called computer-readable media), such as machine-readable storage media (e.g., magnetic disks, optical disks, solid state drives, read only memory (ROM), flash memory devices, phase change memory) and machine-readable transmission media (also called a carrier) (e.g., electrical, optical, radio, acoustical or other form of propagated signals - such as carrier waves, infrared signals). Thus, an electronic device (e.g., a computer or similar computing device) includes hardware and software, such as a set of one or more processors (e.g., wherein a processor is a microprocessor, controller, microcontroller, central processing unit, digital signal processor, application specific integrated circuit, field programmable gate array, other electronic circuitry, a combination of one or more of the preceding) coupled to one or more machine-readable storage media to store code for execution on the set of processors and/or to store data. For instance, an electronic device may include non-volatile memory containing the code since the non-volatile memory can persist code/data even when the electronic device is turned off (when power is removed), and while the electronic device is turned on that part of the code that is to be executed by the processor(s) of that electronic device is typically copied from the slower non-volatile memory into volatile memory (e.g., dynamic random access memory (DRAM), static random access memory (SRAM)) of that electronic device. Typical electronic devices also include a set or one or more physical network interface(s) (NI(s)) to establish network connections (to transmit and/or receive code and/or data using propagating signals) with other electronic devices. For example, the set of physical NIs (or the set of physical NI(s) in combination with the set of processors executing code) may perform any formatting, coding, or translating to allow the electronic device to send and receive data whether over a wired and/or a wireless connection. In some embodiments, a physical NI may comprise radio circuitry capable of receiving data from other electronic devices over a wireless connection and/or sending data out to other devices via a wireless connection. This radio circuitry may include transmitter(s), receiver(s), and/or transceiver(s) suitable for radiofrequency communication. The radio circuitry may convert digital data into a radio signal having the appropriate parameters (e.g., frequency, timing, channel, bandwidth, etc.). The radio signal may then be transmitted via antennas to the appropriate recipient(s). In some embodiments, the set of physical NI(s) may comprise network interface controller(s) (NICs), also known as a network interface card, network adapter, or local area network (LAN) adapter. The NIC(s) may facilitate in connecting the electronic device to other electronic devices allowing them to communicate via wire through plugging in a cable to a physical port connected to a NIC. One or more parts of an embodiment of the invention may be implemented using different combinations of software, firmware, and/or hardware.

A network device (ND) is an electronic device that communicatively interconnects other electronic devices on the network (e.g., other network devices, end-user devices). Some network devices are "multiple services network devices" that provide support for multiple networking functions (e.g., routing, bridging, switching, Layer 2 aggregation, session border control, Quality of Service, and/or subscriber management), and/or provide support for multiple application services (e.g., data, voice, and video).

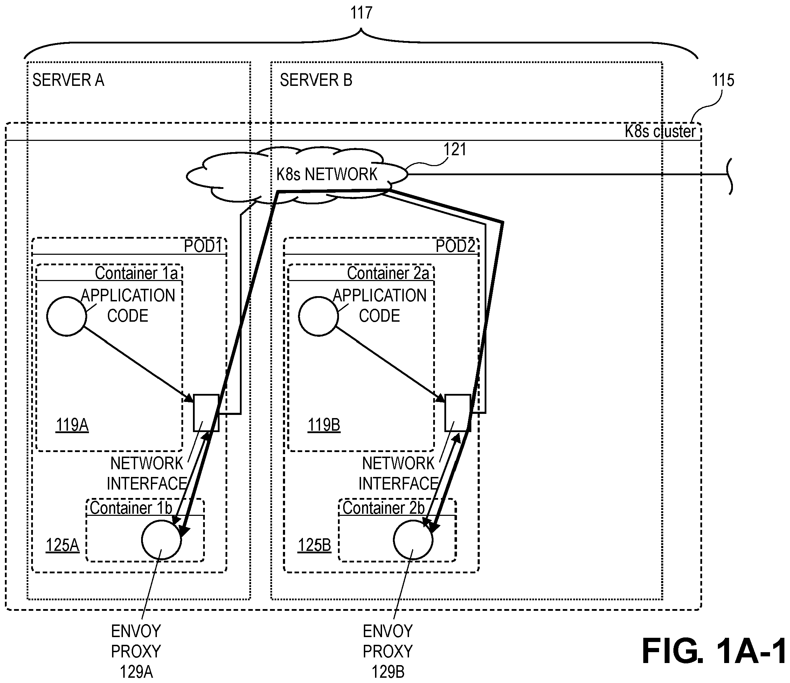

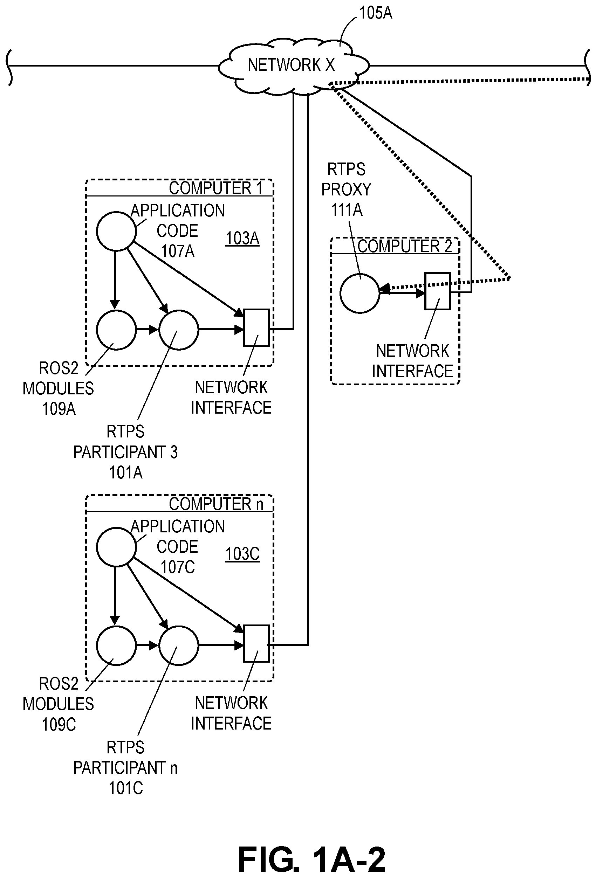

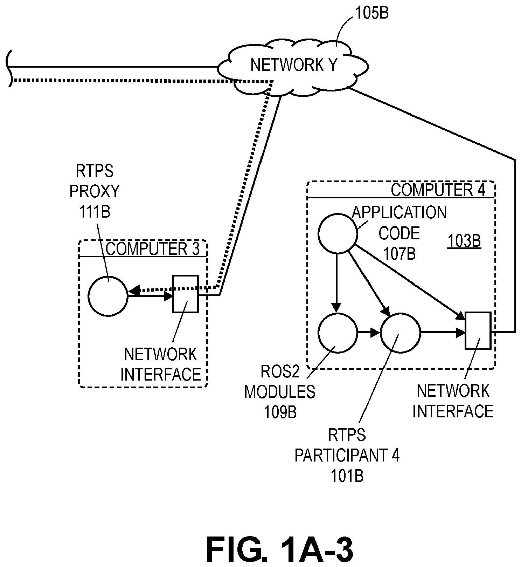

Figure 1A is a diagram of one example embodiment of a DDS domain including nodes that are not implemented in a virtualized or cloud computing environment. The diagram illustrates the operation of RTPS to establish communication between the RTPS participants. To deploy RTPS participant nodes and thereby enable communication between Data Distribution Service (DDS) nodes, Robot Operating System (ROS) v2 (ROS2) nodes, each RTPS participant must know the metadata locators (e.g., Internet Protocol (IP) address and UDP port number) of every other RTPS participant that are part of the DDS domain. The discovery of the other RTPS participants is achieved by the RTPS Participant Discovery Protocol (PDP), which encompasses the Simple Participant Discovery Protocol (SPDP). The SPDP requires the use of IP multicast for automated discovery of the RTPS participants. If IP multicast is not supported in the networks in which the RTPS participants are located, then the only alternative is to for all endpoint addresses to be manually pre-configured in advance in each other RTPS participant. Pre-configuring each RTPS participant is labour and time intensive and does not allow for dynamic changes in the RTPS participants.

In the example of Figure 1A, there are a set of RTPS participants (101A-C) that are executing on separate computing devices (103A-C). Each RTPS participant (101A-C) enables communication between other functions or programs local to that RTPS participant (101A-C) such as applications 107A-C and ROS2 modules 109A-C. For example, an application 107A can communicate via RTPS with application 107C (e.g., by registering interest in a topic advertised by application 107C) via the respective RTPS participant nodes 101A and 101C, which can communicate via local network interfaces on the network 105A. In some cases, applications 107A and 107C can communicate indirectly via calls to other software such as local ROS2 modules 109A and 109C. In cases where the DDS domain encompasses multiple networks (e.g., networks 105A and 105B), then the RTPS participants communicate via RTPS proxies 111A and 111B when communicated across networks 105A and 105B.

Also illustrated in Figure 1A is an example virtualized environment of a Kubernetes (K8s) network. While the examples herein utilize an example of a Kubernetes network for a virtualized execution environment, one skilled in the art would understand that other similar virtual execution environments are also adaptable with the embodiments described herein. In the example, a Kubernetes cluster 115 executes across a set of servers 117. Each server executes a POD 125A and 125B. A POD is a grouping of containers on a server. A given server can execute multiple PODs and each POD can include multiple containers. PODS do not execute over multiple servers. Each POD 125A and 125B offers services to the containers 119A and 119B that is supports to facilitate communication and resource sharing between the containers 119A and 119B within the respective POD 125A and 125B. Each container 119A and 119B can support a set of applications. A 'set,' as used herein, refers to any whole number of items including one item. The PODs 125A and 125B are connected to an internal network 121 for the Kubernetes cluster 115. The internal network 121 enables communication between PODs 125A and 125B. To enhance communication of applications of a given container 119A and 119B t with applications in another POD 125A and 125B a set of envoy proxies 129A and 129B can be deployed that intercept communications between these applications and provide additional features such as fine-tuned traffic steering, load balancing, and similar functions. Envoy proxies 129A and 129B do not support or implement multicast.

However, a Kubernetes cluster 115 is not required to support multicast. Thus, by default, the support of multicast cannot be assumed within a Kubernetes cluster 115. An application executing in the Kubernetes cluster 115 cannot rely on a possible specific implementation aspect of the Kubernetes cluster 115 for operation. Multicast implementation, even when present in a Kubernetes cluster, is usually hidden-from-tenants (i.e., and applications of the tenants). Thus, a given Kubernetes cluster 115 infrastructure does not effectively support multicast, which makes deployment of RTPS in this virtualized environment unreliable.

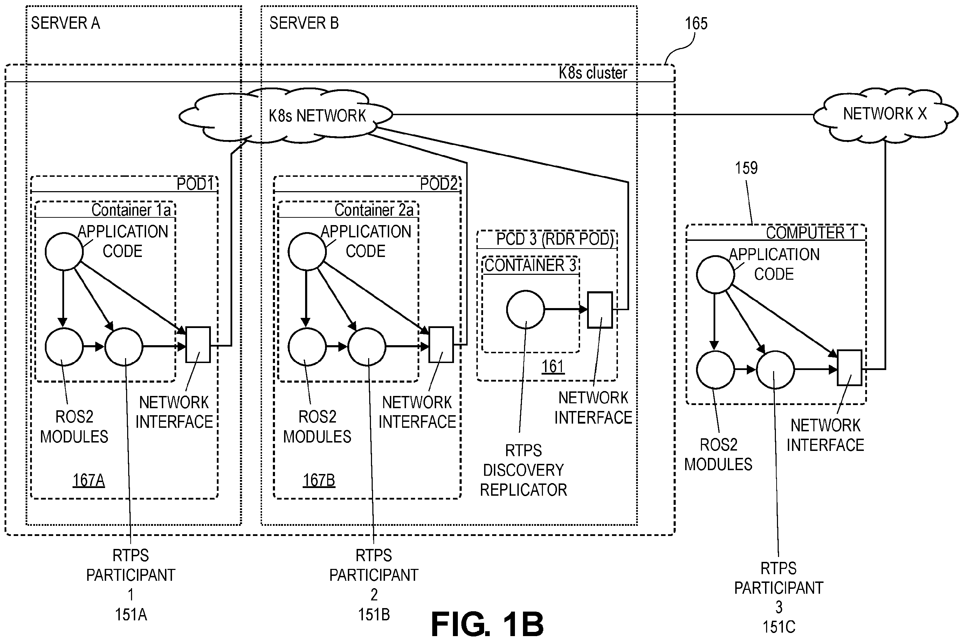

The embodiments overcome these limitations of the art as shown in Figure 1B. Figure 1B is a diagram of another example embodiment of DDS domain that includes nodes that are implemented in a virtualized computing environment where RTPS can be deployed.

The embodiments enable the deploying of RTPS participants to a virtual execution environment such as a cloud computing environment (e.g., a Kubernetes cluster) without losing the main advantages of running RTPS in the cloud including where multicast is not supported. The embodiments avoid a significant configuration burden to pre-configure all endpoints. The embodiments also enable scale-out (i.e., on-the-fly adding of new RTPS participants).

As shown in Figure 1B, a set of RTPS participants 151A-C can support a set of applications and programs (e.g., applications running on ROS2). The RTPS participants 151A and 151B that are within a virtual execution environment without guaranteed multicast support (e.g., in a Kubernetes cluster 165) can utilize an RTPS discovery replicator 161 to perform discovery and identify RTPS participants (e.g., RTPS participant 151C) outside of the virtual execution environment. The operation of the RTPS discovery replicator 161, referred to herein as a 'replicator' is described in further detail herein below. In this manner, RTPS participants in a virtual execution environment (e.g., executing on PODS 167A and 167B of a Kubernetes cluster 165) can discover and thereby communicate with RTPS participants on computing devices 159 external to the virtual execution environment.

In the embodiments, all RTPS participants in a virtual execution environment are configured to send initial discovery packets to the replicator. In some embodiments, the replicator is executed in a separate POD in Kubernetes and keeps a list of active RTPS domain participants. The embodiments include multiple options for managing the list of RTPS domain participants. Once an RTPS discovery packet is received by the replicator, the replicator replicates the received payload to all RTPS participants in the list of active RTPS domain participants. The embodiments make RTPS discovery in virtual execution environments (e.g., in Kubernetes clusters) possible thereby eliminating having to configure all RTPS participant addresses in all other RTPS endpoints. The embodiments can use the same configuration with the IP and port of the replicator in all clients (i.e., the RTPS participants can rely on a known IP and port to access the replicator. The embodiments do not require altering the standard DDS/RTPS (ROS2) behavior. The embodiments also utilize existing Kubernetes standards without increasing or changing the requirements for a Kubernetes implementation. These advantages of the embodiments are further described with reference to the additional figures.

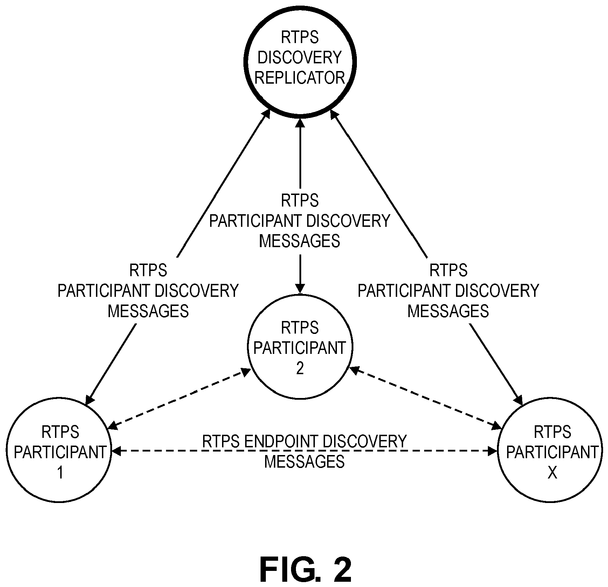

Figure 2 is a diagram of a set of participants communicating with a RTPS discovery replicator (RDR). The embodiments describe an example implementation in Kubernetes, but one skilled in the art would understand that the principles, structures, and methods of the embodiments are applicable to other similar virtual execution environments. The RDR, i.e., the replicator, receives RTPS participant discovery messages from all RTPS endpoints (e.g., as shown by solid lines and arrows in Figure 2). The replicator forwards (i.e., replicates) these messages to all other RTPS participants. In this manner, the RTPS participants become aware of other RTPS participants' metadata locator (IP address and port) in the RTPS participant discovery messages. Then, with the metadata locator information each RTPS participant can directly communicate with the other RTPS participants and continue with the RTPS endpoint discovery process by sending RTPS endpoint discovery messages directly to the other RTPS endpoint (e.g., as shown with dashed lines and arrows in Figure 2).

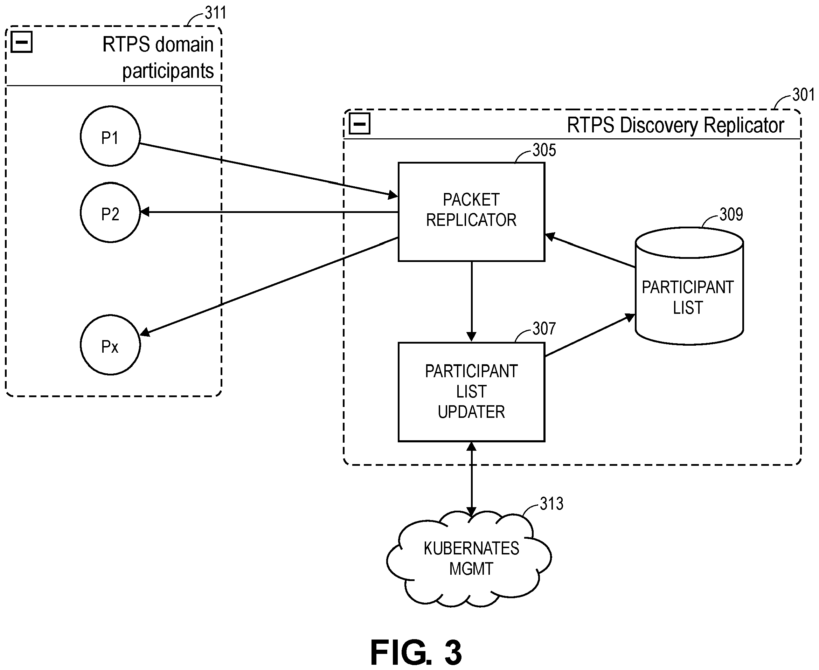

Figure 3 is a diagram of one embodiment of the components of a discovery replicator. The replicator implements two main processes, (1) the packet replicator process, which receives the RTPS packets and replicates them to all other participants, and (2) the participant list updates process, which takes care of creating and updating the list of participants where the packets are to be sent to. The replicator 301 can separate these functions into separate components as a packet replicator 305 and a participant list updater 307. In other embodiments, these functions can be implemented as a single component or further sub-divided into additional functional components. The replicator 301 can store and manage a participant list 309. In other embodiments, the participant list 309 can be separately stored. The replicator 301 communicates and replicates packets to other RTPS participants in the RTPS domain 311. The replicator 301 executes in a virtual execution environment and can utilize the functions and resources thereof. For example, the replicator 301 can utilize Kubernetes management functions 313 when implemented in a Kubernetes cluster.

The operations in the flow diagrams will be described with reference to the exemplary embodiments of the other figures. However, it should be understood that the operations of the flow diagrams can be performed by embodiments of the invention other than those discussed with reference to the other figures, and the embodiments of the invention discussed with reference to these other figures can perform operations different than those discussed with reference to the flow diagrams.

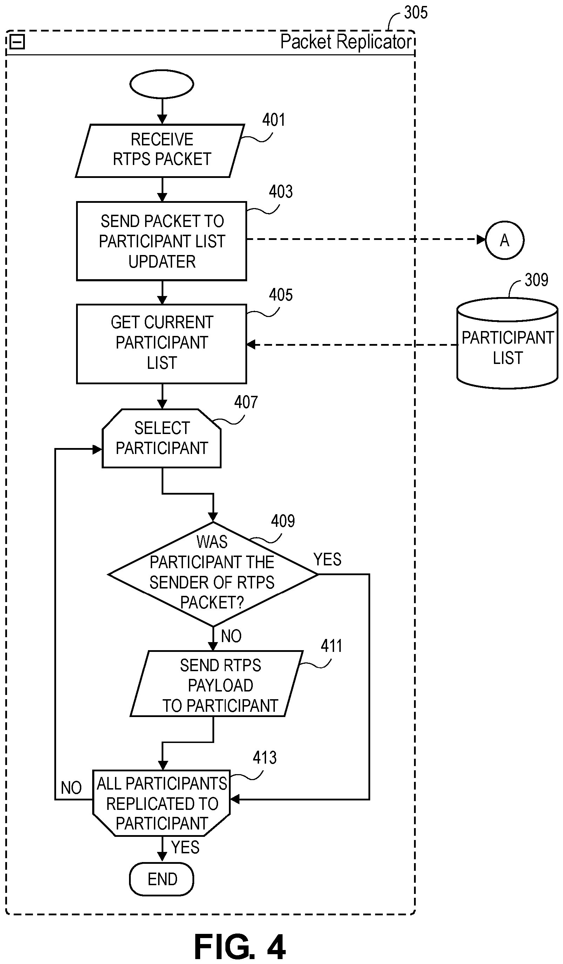

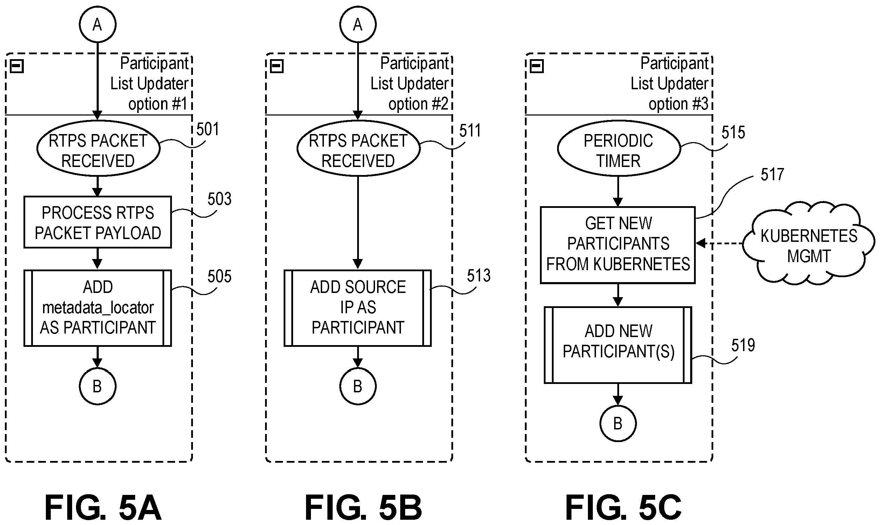

Figure 4 is a flowchart of one embodiment the packet replicator process of the discovery replicator. The packet replicator 305 can implement the packet replicator process. The packet replicator process can be inititiated in response to a received discovery packet being received (Block 401). A copy of the received RTPS discover packet can be forwarded to the participant list updater process (A - to be processed as described herein below with relation to Figures 5A-E) (Block 403). The packet replicator queries to obtain a current list of participants from the stored participant list or by calling the participant list updater (Block 405). The participant list is returned in response to the query and the received discovery packet is replicated to each RTPS participant in the returned list, except the sender of the packet. In some embodiments, the received discovery packet is also sent back to the original sender. RTPS participants are known to be resilient to receiving the discovery packets that the participant originated. Replicating the discovery packet can be done iteratively by selecting a next participant from the list (Block 407), determining whether the selected participant is a sender/originator of the received discovery packet, and sending a copy of the discovery packet to the selected participant (Block 411) when the selected participant is not the sender/originator. The process determines whether all participants in the list have been sent a copy of the received discovery packet (Block 413). If all participants have received a copy of the discovery packet, then the process completes. If additional participants remain on the participant list, then a next participant is selected (Block 407).

Figures 5A-D are diagrams of a set of optional embodiments for the participant list updater. The embodiments include multiple options for the process of participant list updater component 307. There four options presented, all of them returning to the packet replicator (step B). In a first and second example option (options #1 and #2), these processes are triggered by receiving an RTPS packet from the packet replicator process (step A). In contrast, example options #3 and #4 are initiated based on interactions with Kubernetes.

In example option #1 (RTPS payload based) of Figure 5A, the process receives a RTPS packet from the packet replicator (Block 501). In this cast the replicator processes (Block 503) and understands the RTPS payload of the received discovery packet. The RTPS metadata locator (IP address and UDP port number) sent in the RTPS payload is retrieved from the received discovery packet and added to the participant list (Block 505).

In example option #2 (Source IP based) of Figure 5B, the replicator will not process the received RTPS payload. The process starts with receiving the RTPS discovery packet from the packet replicator (Block 511). The participant list updater does not process the payload of the received discover packet. Instead, the participant updater adds the source IP address of the received packet (together with a pre-configured/determined port) to the participant list (Block 513). In this option, the pre-configured port can be the RTPS default metadata UPD port (e.g., port 7400) or simlar port, which must be used through all RTPS domain participants.

In example option #3 of Figure 5C, the participant list updater refreshes the locally stored participant list by periodically polling or similarly querying the underlying virtual execution environment (e.g., the Kubernetes management framework) (Block 515). The virtual execution environment can determine the set of participants by tracking RTPS participants and/or connections between the virtual execution environment and external RTPS participants (Block 517). This information can then be utilized to update the participant list (Block 519).

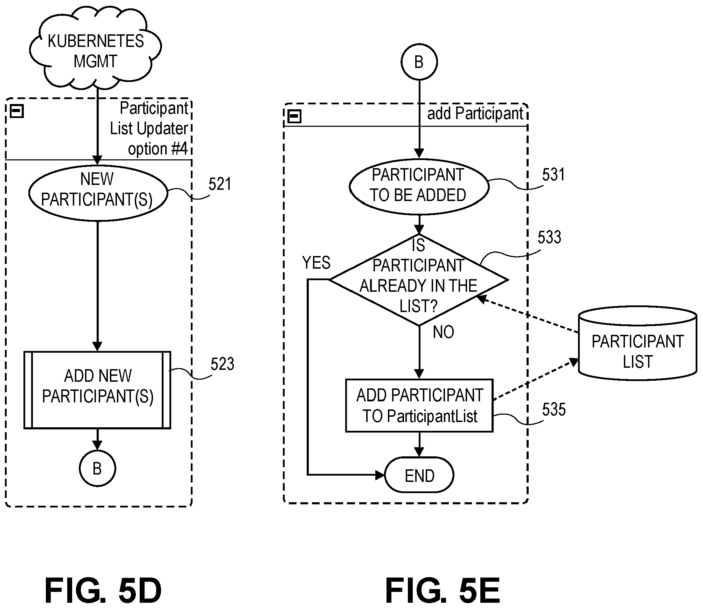

In example option #4 (Figure 5D), the participant list updater receives updated participant information from the virtual execution environment without having to poll or query the virtual execution environment (Block 521). For example, relevant changes in the Kubernetes mgmt. framework can trigger the provision of information to the participant list updater. The participant list updater can use the provided information to update of the participant list (Block 523). For example, when the virtual execution environment adds a container or POD with an RTPS participant then appropriate additional metadata information will be collected and result in the provision of this information to the participant list updater to be added to the participant list.

Figure 5E is a diagram of the further operation of the participant list updater that is applicable across different embodiments. Where there is a participant to be added (Block 531) a check can be made whether the participant is already in the participant list (Block 533). If the participant to be added is not in the participant list, then the participant is added (Block 535). Similarly, the participant list updater may remove a participant from the participant list as a result of one or several conditions including the replicator does not receive RTPS participant discovery message for a certain (pre-configured) time period, the virtual execution environment (e.g., Kubernetes management) indicates the termination of a container or POD that implements a previously identified RTPS endpoint to the replicator, or similar conditions. The options #3 and #4 can encompass the virtual execution environment providing removal related information in response to a query or the termination, respectively.

### Example Implementations

The replicator functionality can be implemented in a separate dedicated container or POD. However, this functionality can also be distributed to a set of entities, e.g. multiple interworking PODs (e.g., as a Kubernetes DaemonSet) or sidecar proxies. In the case of implementing the replicator functions as sidecar proxies, additional packet manipulating functionality can be placed in each RTPS participant POD or container.

### Kubernetes-external RTPS nodes

In cases where Kubernetes is the virtual execution environment, Kubernetes-External RTPS endpoints can be included in the discovery (e.g., as discussed with relation to Figure 1B). In one embodiment, the replicator can be reached via a public unicast service address, both internally and externally. In another embodiment, external RTPS endpoints are configured to use multicast IP for discovery (according to the default RTPS behavior), while cloud-internal endpoints are configured to use the service unicast IP address of the replicator. In this case, Kubernetes or similar virtual execution environments can be configured for received multicast to reach the replicator (e.g. by using "hostNetwork:true"). If multicast RTPS discovery traffic can reach the cloud, it can also reach the replicator, which behaves the same way as described herein above. As mentioned above, receiving the same RTPS discovery packet twice isn't a problem for the embodiments since RTPS (e.g. in case of another external node: first instance by multicast, second instance from the RDR POD) is resilient for such cases. This embodiment involves is configuring the virtual execution environment (e.g., Kubernetes) to get the multicast packet to the replicator, while the advantage is zero-touch configuration for the external nodes, as well as resilience of discovery in case of connection loss to the cloud. External nodes are supported by participant list updater options #1 and #2 as described above. Participant list updater options #3 and #4 can support external RTPS participants by static configuration of external nodes in the participant list.

### Example Replicator Interactions

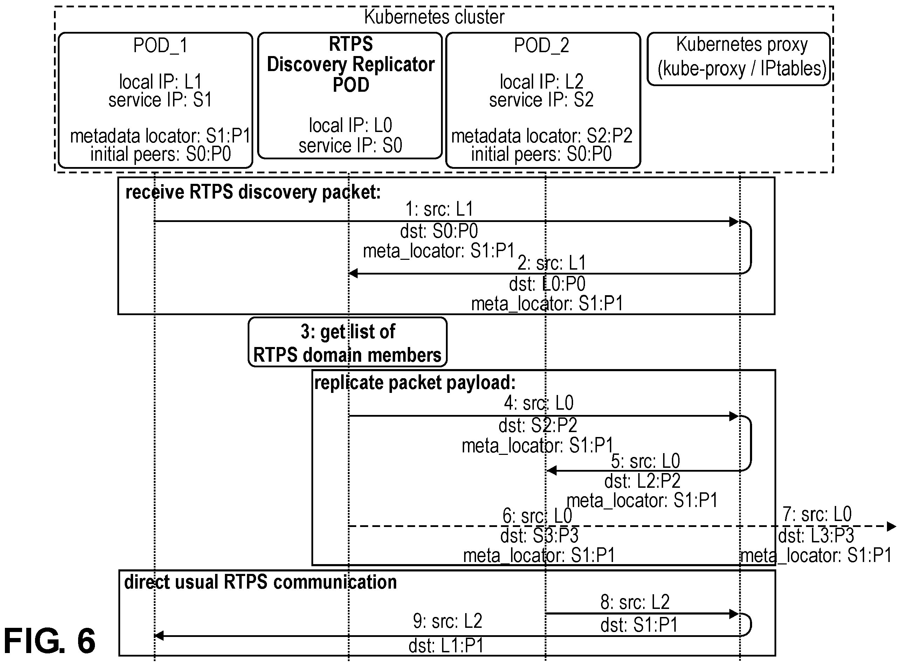

Figure 6 is a diagram of one example of how the replicator works and interacts with the other components of the virtual execution environment and other RTPS participants. In this example there are 2 RTPS nodes deployed with PODs in Kubernetes cluster, and a replicator deployed as a POD in the Kubernetes cluster, all these PODs are behind Kubernetes service IPs. Figure 6 illustrates through this example, how the RTPS discovery according to the example embodiment. Before starting any RTPS based application, a replicator service is deployed in the virtual execution environment (e.g., here an example Kubernetes cluster). As a result, the IP address (S0) and UDP port (P0) values of the replicator service are available. Each RTPS participant is configured by setting the replicator service IP address and UDP port values (S0, P0) as an item of the RTPS InitialPeers.

The example discovery process is described with numbering referring to numbers in Figure 6. In step 1, the RTPS participant starts (e.g., in POD_1), it periodically generates RTPS participant discovery packet to the replicator (instead of the default RTPS multicast discovery IP address). The IP destination of the packet is the service IP of the replicator, resulting in the discovery packet being sent through the Kubernetes proxy functionality. The RTPS discovery packet payload contains POD_1's metadata locator (IP + port as S1:P1) to be advertised to all other RTPS nodes. This metadata locator is a public (also cluster-external reachable) service address of the POD.

In example step 2, the Kubernetes proxy replaces the destination IP to the POD IP of the replicator. The packet is received by the replicator. In example step 3, the replicator gets the list of the RTPS domain members, to whom the received discovery packet is to be sent. In this example, the replicator has S1:P1, S2:P2 and S3:P3 in the participant list.

In example step 4, the payload of the received packet (i.e. the RTPS discovery message) is replicated by the replicator to each destination (i.e., each RTPS participant) from the participant list. In this example, two replicas are generated, one for POD2 and one for POD3.

The replicator sends one copy of the RTPS discovery message to POD2 by setting the destination IP address and port of the packet to the ones associated with POD2. In this example, a service address and port pair (S2, P2) is associated with POD2

In example step 5, the RTPS endpoint in POD_2 receives the RTPS payload containing the advertisement S1:P1 from POD_1. The source and destination IP in the packet header are not taken care of by RTPS, rather it processes the RTPS payload. Thus, there is not a problem that a Kubernetes-proxy may have source-/destination-native address translated (NATed) the packet, as the sender of the packet was the replicator, not POD_1.

Steps 6 and 7 replicates the preceding steps for POD_3. In step 8, as POD_2 received the metadata_locator S1:P1, it can send direct RTPS packets to POD_1. Because POD_1 advertised the POD_1's service IP, the packet it's NATed in Kubernetes proxy to the POD IP of POD_1.

In step 9, POD_1 receives the RTPS packet sent from POD_2. The two RTPS participants can then build up RTPS communication between each other. Similar steps will happen with all other RTPS endpoints, e.g. POD_3.

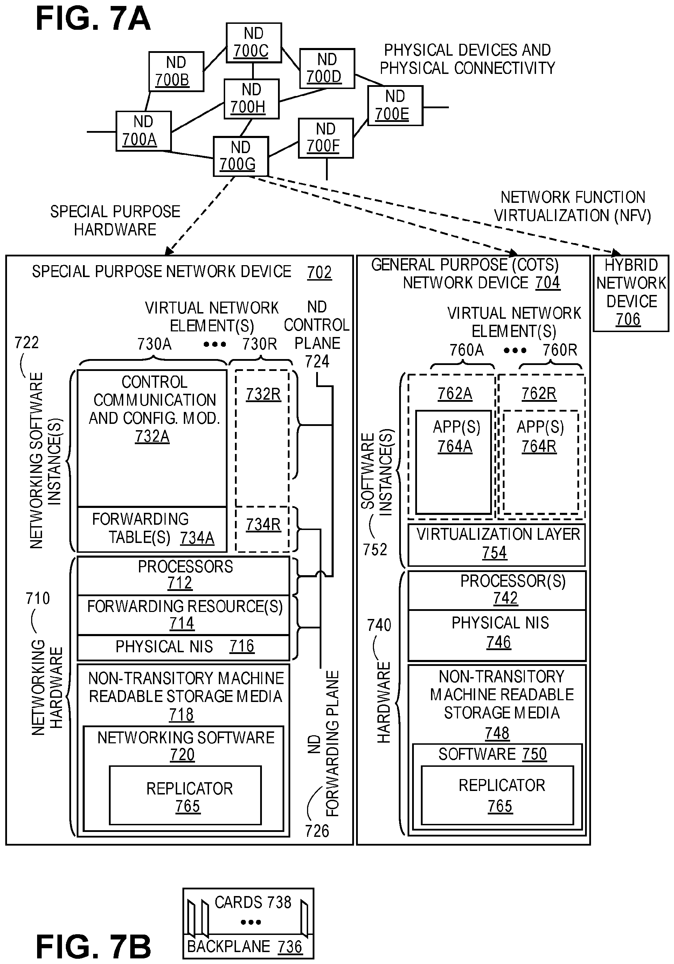

Figure 7A illustrates connectivity between network devices (NDs) within an exemplary network, as well as three exemplary implementations of the NDs, according to some embodiments of the invention. Figure 7A shows NDs 700A-H, and their connectivity by way of lines between 700A-700B, 700B-700C, 700C-700D, 700D-700E, 700E-700F, 700F-700G, and 700A-700G, as well as between 700H and each of 700A, 700C, 700D, and 700G. These NDs are physical devices, and the connectivity between these NDs can be wireless or wired (often referred to as a link). An additional line extending from NDs 700A, 700E, and 700F illustrates that these NDs act as ingress and egress points for the network (and thus, these NDs are sometimes referred to as edge NDs; while the other NDs may be called core NDs).

Two of the exemplary ND implementations in Figure 7A are: 1) a special-purpose network device 702 that uses custom application-specific integrated-circuits (ASICs) and a special-purpose operating system (OS); and 2) a general purpose network device 704 that uses common off-the-shelf (COTS) processors and a standard OS.

The special-purpose network device 702 includes networking hardware 710 comprising a set of one or more processor(s) 712, forwarding resource(s) 714 (which typically include one or more ASICs and/or network processors), and physical network interfaces (NIs) 716 (through which network connections are made, such as those shown by the connectivity between NDs 700A-H), as well as non-transitory machine readable storage media 718 having stored therein networking software 720. During operation, the networking software 720 may be executed by the networking hardware 710 to instantiate a set of one or more networking software instance(s) 722. Each of the networking software instance(s) 722, and that part of the networking hardware 710 that executes that network software instance (be it hardware dedicated to that networking software instance and/or time slices of hardware temporally shared by that networking software instance with others of the networking software instance(s) 722), form a separate virtual network element 730A-R. Each of the virtual network element(s) (VNEs) 730A-R includes a control communication and configuration module 732A-R (sometimes referred to as a local control module or control communication module) and forwarding table(s) 734A-R, such that a given virtual network element (e.g., 730A) includes the control communication and configuration module (e.g., 732A), a set of one or more forwarding table(s) (e.g., 734A), and that portion of the networking hardware 710 that executes the virtual network element (e.g., 730A). The replicator 765 as described herein can be stored in the non-transitory machine readable storage media and executed as part of a virtualized execution environment on the special purpose network device 702.

The special-purpose network device 702 is often physically and/or logically considered to include: 1) a ND control plane 724 (sometimes referred to as a control plane) comprising the processor(s) 712 that execute the control communication and configuration module(s) 732A-R; and 2) a ND forwarding plane 726 (sometimes referred to as a forwarding plane, a data plane, or a media plane) comprising the forwarding resource(s) 714 that utilize the forwarding table(s) 734A-R and the physical NIs 716. By way of example, where the ND is a router (or is implementing routing functionality), the ND control plane 724 (the processor(s) 712 executing the control communication and configuration module(s) 732A-R) is typically responsible for participating in controlling how data (e.g., packets) is to be routed (e.g., the next hop for the data and the outgoing physical NI for that data) and storing that routing information in the forwarding table(s) 734A-R, and the ND forwarding plane 726 is responsible for receiving that data on the physical NIs 716 and forwarding that data out the appropriate ones of the physical NIs 716 based on the forwarding table(s) 734A-R.

Figure 7B illustrates an exemplary way to implement the special-purpose network device 702 according to some embodiments of the invention. Figure 7B shows a special-purpose network device including cards 738 (typically hot pluggable). While in some embodiments the cards 738 are of two types (one or more that operate as the ND forwarding plane 726 (sometimes called line cards), and one or more that operate to implement the ND control plane 724 (sometimes called control cards)), alternative embodiments may combine functionality onto a single card and/or include additional card types (e.g., one additional type of card is called a service card, resource card, or multi-application card). A service card can provide specialized processing (e.g., Layer 4 to Layer 7 services (e.g., firewall, Internet Protocol Security (IPsec), Secure Sockets Layer (SSL) / Transport Layer Security (TLS), Intrusion Detection System (IDS), peer-to-peer (P2P), Voice over IP (VoIP) Session Border Controller, Mobile Wireless Gateways (Gateway General Packet Radio Service (GPRS) Support Node (GGSN), Evolved Packet Core (EPC) Gateway)). By way of example, a service card may be used to terminate IPsec tunnels and execute the attendant authentication and encryption algorithms. These cards are coupled together through one or more interconnect mechanisms illustrated as backplane 736 (e.g., a first full mesh coupling the line cards and a second full mesh coupling all of the cards).

Returning to Figure 7A, the general purpose network device 704 includes hardware 740 comprising a set of one or more processor(s) 742 (which are often COTS processors) and physical NIs 746, as well as non-transitory machine readable storage media 748 having stored therein software 750. During operation, the processor(s) 742 execute the software 750 to instantiate one or more sets of one or more applications 764A-R. While one embodiment does not implement virtualization, alternative embodiments may use different forms of virtualization. For example, in one such alternative embodiment the virtualization layer 754 represents the kernel of an operating system (or a shim executing on a base operating system) that allows for the creation of multiple instances 762A-R called software containers that may each be used to execute one (or more) of the sets of applications 764A-R; where the multiple software containers (also called virtualization engines, virtual private servers, or jails) are user spaces (typically a virtual memory space) that are separate from each other and separate from the kernel space in which the operating system is run; and where the set of applications running in a given user space, unless explicitly allowed, cannot access the memory of the other processes. In another such alternative embodiment the virtualization layer 754 represents a hypervisor (sometimes referred to as a virtual machine monitor (VMM)) or a hypervisor executing on top of a host operating system, and each of the sets of applications 764A-R is run on top of a guest operating system within an instance 762A-R called a virtual machine (which may in some cases be considered a tightly isolated form of software container) that is run on top of the hypervisor - the guest operating system and application may not know they are running on a virtual machine as opposed to running on a "bare metal" host electronic device, or through para-virtualization the operating system and/or application may be aware of the presence of virtualization for optimization purposes. In yet other alternative embodiments, one, some or all of the applications are implemented as unikernel(s), which can be generated by compiling directly with an application only a limited set of libraries (e.g., from a library operating system (LibOS) including drivers/libraries of OS services) that provide the particular OS services needed by the application. As a unikernel can be implemented to run directly on hardware 740, directly on a hypervisor (in which case the unikernel is sometimes described as running within a LibOS virtual machine), or in a software container, embodiments can be implemented fully with unikernels running directly on a hypervisor represented by virtualization layer 754, unikernels running within software containers represented by instances 762A-R, or as a combination of unikernels and the above-described techniques (e.g., unikernels and virtual machines both run directly on a hypervisor, unikernels and sets of applications that are run in different software containers). The replicator 765 as described herein can be stored in the non-transitory machine readable storage media 748 and executed as part of a virtualized execution environment on the general purpose network device 704.

The instantiation of the one or more sets of one or more applications 764A-R, as well as virtualization if implemented, are collectively referred to as software instance(s) 752. Each set of applications 764A-R, corresponding virtualization construct (e.g., instance 762A-R) if implemented, and that part of the hardware 740 that executes them (be it hardware dedicated to that execution and/or time slices of hardware temporally shared), forms a separate virtual network element(s) 760A-R.

The virtual network element(s) 760A-R perform similar functionality to the virtual network element(s) 730A-R - e.g., similar to the control communication and configuration module(s) 732A and forwarding table(s) 734A (this virtualization of the hardware 740 is sometimes referred to as network function virtualization (NFV)). Thus, NFV may be used to consolidate many network equipment types onto industry standard high volume server hardware, physical switches, and physical storage, which could be located in Data centers, NDs, and customer premise equipment (CPE). While embodiments of the invention are illustrated with each instance 762A-R corresponding to one VNE 760A-R, alternative embodiments may implement this correspondence at a finer level granularity (e.g., line card virtual machines virtualize line cards, control card virtual machine virtualize control cards, etc.); it should be understood that the techniques described herein with reference to a correspondence of instances 762A-R to VNEs also apply to embodiments where such a finer level of granularity and/or unikernels are used.

In certain embodiments, the virtualization layer 754 includes a virtual switch that provides similar forwarding services as a physical Ethernet switch. Specifically, this virtual switch forwards traffic between instances 762A-R and the physical NI(s) 746, as well as optionally between the instances 762A-R; in addition, this virtual switch may enforce network isolation between the VNEs 760A-R that by policy are not permitted to communicate with each other (e.g., by honoring virtual local area networks (VLANs)).

The third exemplary ND implementation in Figure 7A is a hybrid network device 706, which includes both custom ASICs/special-purpose OS and COTS processors/standard OS in a single ND or a single card within an ND. In certain embodiments of such a hybrid network device, a platform VM (i.e., a VM that that implements the functionality of the special-purpose network device 702) could provide for para-virtualization to the networking hardware present in the hybrid network device 706.

Regardless of the above exemplary implementations of an ND, when a single one of multiple VNEs implemented by an ND is being considered (e.g., only one of the VNEs is part of a given virtual network) or where only a single VNE is currently being implemented by an ND, the shortened term network element (NE) is sometimes used to refer to that VNE. Also, in all of the above exemplary implementations, each of the VNEs (e.g., VNE(s) 730A-R, VNEs 760A-R, and those in the hybrid network device 706) receives data on the physical NIs (e.g., 716, 746) and forwards that data out the appropriate ones of the physical NIs (e.g., 716, 746). For example, a VNE implementing IP router functionality forwards IP packets on the basis of some of the IP header information in the IP packet; where IP header information includes source IP address, destination IP address, source port, destination port (where "source port" and "destination port" refer herein to protocol ports, as opposed to physical ports of a ND), transport protocol (e.g., user datagram protocol (UDP), Transmission Control Protocol (TCP), and differentiated services code point (DSCP) values.

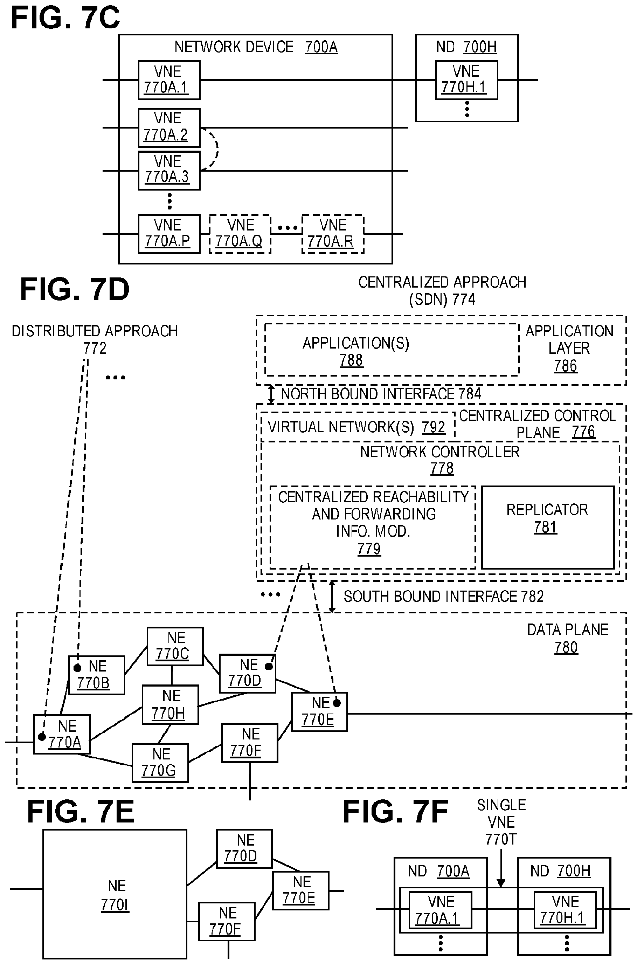

Figure 7C illustrates various exemplary ways in which VNEs may be coupled according to some embodiments of the invention. Figure 7C shows VNEs 770A. 1-770A.P (and optionally VNEs 770A.Q-770A.R) implemented in ND 700A and VNE 770H. 1 in ND 700H. In Figure 7C, VNEs 770A.1-P are separate from each other in the sense that they can receive packets from outside ND 700A and forward packets outside of ND 700A; VNE 770A.1 is coupled with VNE 770H.1, and thus they communicate packets between their respective NDs; VNE 770A.2-770A.3 may optionally forward packets between themselves without forwarding them outside of the ND 700A; and VNE 770A.P may optionally be the first in a chain of VNEs that includes VNE 770A.Q followed by VNE 770A.R (this is sometimes referred to as dynamic service chaining, where each of the VNEs in the series of VNEs provides a different service - e.g., one or more layer 4-7 network services). While Figure 7C illustrates various exemplary relationships between the VNEs, alternative embodiments may support other relationships (e.g., more/fewer VNEs, more/fewer dynamic service chains, multiple different dynamic service chains with some common VNEs and some different VNEs).

The NDs of Figure 7A, for example, may form part of the Internet or a private network; and other electronic devices (not shown; such as end user devices including workstations, laptops, netbooks, tablets, palm tops, mobile phones, smartphones, phablets, multimedia phones, Voice Over Internet Protocol (VOIP) phones, terminals, portable media players, GPS units, wearable devices, gaming systems, set-top boxes, Internet enabled household appliances) may be coupled to the network (directly or through other networks such as access networks) to communicate over the network (e.g., the Internet or virtual private networks (VPNs) overlaid on (e.g., tunneled through) the Internet) with each other (directly or through servers) and/or access content and/or services. Such content and/or services are typically provided by one or more servers (not shown) belonging to a service/content provider or one or more end user devices (not shown) participating in a peer-to-peer (P2P) service, and may include, for example, public webpages (e.g., free content, store fronts, search services), private webpages (e.g., username/password accessed webpages providing email services), and/or corporate networks over VPNs. For instance, end user devices may be coupled (e.g., through customer premise equipment coupled to an access network (wired or wirelessly)) to edge NDs, which are coupled (e.g., through one or more core NDs) to other edge NDs, which are coupled to electronic devices acting as servers. However, through compute and storage virtualization, one or more of the electronic devices operating as the NDs in Figure 7A may also host one or more such servers (e.g., in the case of the general purpose network device 704, one or more of the software instances 762A-R may operate as servers; the same would be true for the hybrid network device 706; in the case of the special-purpose network device 702, one or more such servers could also be run on a virtualization layer executed by the processor(s) 712); in which case the servers are said to be co-located with the VNEs of that ND.

A virtual network is a logical abstraction of a physical network (such as that in Figure 7A) that provides network services (e.g., L2 and/or L3 services). A virtual network can be implemented as an overlay network (sometimes referred to as a network virtualization overlay) that provides network services (e.g., layer 2 (L2, data link layer) and/or layer 3 (L3, network layer) services) over an underlay network (e.g., an L3 network, such as an Internet Protocol (IP) network that uses tunnels (e.g., generic routing encapsulation (GRE), layer 2 tunneling protocol (L2TP), IPSec) to create the overlay network).

A network virtualization edge (NVE) sits at the edge of the underlay network and participates in implementing the network virtualization; the network-facing side of the NVE uses the underlay network to tunnel frames to and from other NVEs; the outward-facing side of the NVE sends and receives data to and from systems outside the network. A virtual network instance (VNI) is a specific instance of a virtual network on a NVE (e.g., a NE/VNE on an ND, a part of a NE/VNE on a ND where that NE/VNE is divided into multiple VNEs through emulation); one or more VNIs can be instantiated on an NVE (e.g., as different VNEs on an ND). A virtual access point (VAP) is a logical connection point on the NVE for connecting external systems to a virtual network; a VAP can be physical or virtual ports identified through logical interface identifiers (e.g., a VLAN ID).

Examples of network services include: 1) an Ethernet LAN emulation service (an Ethernet-based multipoint service similar to an Internet Engineering Task Force (IETF) Multiprotocol Label Switching (MPLS) or Ethernet VPN (EVPN) service) in which external systems are interconnected across the network by a LAN environment over the underlay network (e.g., an NVE provides separate L2 VNIs (virtual switching instances) for different such virtual networks, and L3 (e.g., IP/MPLS) tunneling encapsulation across the underlay network); and 2) a virtualized IP forwarding service (similar to IETF IP VPN (e.g., Border Gateway Protocol (BGP)/MPLS IPVPN) from a service definition perspective) in which external systems are interconnected across the network by an L3 environment over the underlay network (e.g., an NVE provides separate L3 VNIs (forwarding and routing instances) for different such virtual networks, and L3 (e.g., IP/MPLS) tunneling encapsulation across the underlay network)). Network services may also include quality of service capabilities (e.g., traffic classification marking, traffic conditioning and scheduling), security capabilities (e.g., filters to protect customer premises from network - originated attacks, to avoid malformed route announcements), and management capabilities (e.g., full detection and processing).

Fig. 7D illustrates a network with a single network element on each of the NDs of Figure 7A, and within this straight forward approach contrasts a traditional distributed approach (commonly used by traditional routers) with a centralized approach for maintaining reachability and forwarding information (also called network control), according to some embodiments of the invention. Specifically, Figure 7D illustrates network elements (NEs) 770A-H with the same connectivity as the NDs 700A-H of Figure 7A.

Figure 7D illustrates that the distributed approach 772 distributes responsibility for generating the reachability and forwarding information across the NEs 770A-H; in other words, the process of neighbor discovery and topology discovery is distributed.

For example, where the special-purpose network device 702 is used, the control communication and configuration module(s) 732A-R of the ND control plane 724 typically include a reachability and forwarding information module to implement one or more routing protocols (e.g., an exterior gateway protocol such as Border Gateway Protocol (BGP), Interior Gateway Protocol(s) (IGP) (e.g., Open Shortest Path First (OSPF), Intermediate System to Intermediate System (IS-IS), Routing Information Protocol (RIP), Label Distribution Protocol (LDP), Resource Reservation Protocol (RSVP) (including RSVP-Traffic Engineering (TE): Extensions to RSVP for LSP Tunnels and Generalized Multi-Protocol Label Switching (GMPLS) Signaling RSVP-TE)) that communicate with other NEs to exchange routes, and then selects those routes based on one or more routing metrics. Thus, the NEs 770A-H (e.g., the processor(s) 712 executing the control communication and configuration module(s) 732A-R) perform their responsibility for participating in controlling how data (e.g., packets) is to be routed (e.g., the next hop for the data and the outgoing physical NI for that data) by distributively determining the reachability within the network and calculating their respective forwarding information. Routes and adjacencies are stored in one or more routing structures (e.g., Routing Information Base (RIB), Label Information Base (LIB), one or more adjacency structures) on the ND control plane 724. The ND control plane 724 programs the ND forwarding plane 726 with information (e.g., adjacency and route information) based on the routing structure(s). For example, the ND control plane 724 programs the adjacency and route information into one or more forwarding table(s) 734A-R (e.g., Forwarding Information Base (FIB), Label Forwarding Information Base (LFIB), and one or more adjacency structures) on the ND forwarding plane 726. For layer 2 forwarding, the ND can store one or more bridging tables that are used to forward data based on the layer 2 information in that data. While the above example uses the special-purpose network device 702, the same distributed approach 772 can be implemented on the general purpose network device 704 and the hybrid network device 706.

Figure 7D illustrates that a centralized approach 774 (also known as software defined networking (SDN)) that decouples the system that makes decisions about where traffic is sent from the underlying systems that forwards traffic to the selected destination. The illustrated centralized approach 774 has the responsibility for the generation of reachability and forwarding information in a centralized control plane 776 (sometimes referred to as a SDN control module, controller, network controller, OpenFlow controller, SDN controller, control plane node, network virtualization authority, or management control entity), and thus the process of neighbor discovery and topology discovery is centralized. The centralized control plane 776 has a south bound interface 782 with a data plane 780 (sometime referred to the infrastructure layer, network forwarding plane, or forwarding plane (which should not be confused with a ND forwarding plane)) that includes the NEs 770A-H (sometimes referred to as switches, forwarding elements, data plane elements, or nodes). The centralized control plane 776 includes a network controller 778, which includes a centralized reachability and forwarding information module 779 that determines the reachability within the network and distributes the forwarding information to the NEs 770A-H of the data plane 780 over the south bound interface 782 (which may use the OpenFlow protocol). Thus, the network intelligence is centralized in the centralized control plane 776 executing on electronic devices that are typically separate from the NDs.

For example, where the special-purpose network device 702 is used in the data plane 780, each of the control communication and configuration module(s) 732A-R of the ND control plane 724 typically include a control agent that provides the VNE side of the south bound interface 782. In this case, the ND control plane 724 (the processor(s) 712 executing the control communication and configuration module(s) 732A-R) performs its responsibility for participating in controlling how data (e.g., packets) is to be routed (e.g., the next hop for the data and the outgoing physical NI for that data) through the control agent communicating with the centralized control plane 776 to receive the forwarding information (and in some cases, the reachability information) from the centralized reachability and forwarding information module 779 (it should be understood that in some embodiments of the invention, the control communication and configuration module(s) 732A-R, in addition to communicating with the centralized control plane 776, may also play some role in determining reachability and/or calculating forwarding information - albeit less so than in the case of a distributed approach; such embodiments are generally considered to fall under the centralized approach 774, but may also be considered a hybrid approach).

While the above example uses the special-purpose network device 702, the same centralized approach 774 can be implemented with the general purpose network device 704 (e.g., each of the VNE 760A-R performs its responsibility for controlling how data (e.g., packets) is to be routed (e.g., the next hop for the data and the outgoing physical NI for that data) by communicating with the centralized control plane 776 to receive the forwarding information (and in some cases, the reachability information) from the centralized reachability and forwarding information module 779; it should be understood that in some embodiments of the invention, the VNEs 760A-R, in addition to communicating with the centralized control plane 776, may also play some role in determining reachability and/or calculating forwarding information - albeit less so than in the case of a distributed approach) and the hybrid network device 706. In fact, the use of SDN techniques can enhance the NFV techniques typically used in the general purpose network device 704 or hybrid network device 706 implementations as NFV is able to support SDN by providing an infrastructure upon which the SDN software can be run, and NFV and SDN both aim to make use of commodity server hardware and physical switches.

Figure 7D also shows that the centralized control plane 776 has a north bound interface 784 to an application layer 786, in which resides application(s) 788. The centralized control plane 776 has the ability to form virtual networks 792 (sometimes referred to as a logical forwarding plane, network services, or overlay networks (with the NEs 770A-H of the data plane 780 being the underlay network)) for the application(s) 788. Thus, the centralized control plane 776 maintains a global view of all NDs and configured NEs/VNEs, and it maps the virtual networks to the underlying NDs efficiently (including maintaining these mappings as the physical network changes either through hardware (ND, link, or ND component) failure, addition, or removal).

While Figure 7D shows the distributed approach 772 separate from the centralized approach 774, the effort of network control may be distributed differently or the two combined in certain embodiments of the invention. For example: 1) embodiments may generally use the centralized approach (SDN) 774, but have certain functions delegated to the NEs (e.g., the distributed approach may be used to implement one or more of fault monitoring, performance monitoring, protection switching, and primitives for neighbor and/or topology discovery); or 2) embodiments of the invention may perform neighbor discovery and topology discovery via both the centralized control plane and the distributed protocols, and the results compared to raise exceptions where they do not agree. Such embodiments are generally considered to fall under the centralized approach 774, but may also be considered a hybrid approach.

While Figure 7D illustrates the simple case where each of the NDs 700A-H implements a single NE 770A-H, it should be understood that the network control approaches described with reference to Figure 7D also work for networks where one or more of the NDs 700A-H implement multiple VNEs (e.g., VNEs 730A-R, VNEs 760A-R, those in the hybrid network device 706). Alternatively or in addition, the network controller 778 may also emulate the implementation of multiple VNEs in a single ND. Specifically, instead of (or in addition to) implementing multiple VNEs in a single ND, the network controller 778 may present the implementation of a VNE/NE in a single ND as multiple VNEs in the virtual networks 792 (all in the same one of the virtual network(s) 792, each in different ones of the virtual network(s) 792, or some combination). For example, the network controller 778 may cause an ND to implement a single VNE (a NE) in the underlay network, and then logically divide up the resources of that NE within the centralized control plane 776 to present different VNEs in the virtual network(s) 792 (where these different VNEs in the overlay networks are sharing the resources of the single VNE/NE implementation on the ND in the underlay network).

On the other hand, Figures 7E and 7F respectively illustrate exemplary abstractions of NEs and VNEs that the network controller 778 may present as part of different ones of the virtual networks 792. Figure 7E illustrates the simple case of where each of the NDs 700A-H implements a single NE 770A-H (see Figure 7D), but the centralized control plane 776 has abstracted multiple of the NEs in different NDs (the NEs 770A-C and G-H) into (to represent) a single NE 770I in one of the virtual network(s) 792 of Figure 7D, according to some embodiments of the invention. Figure 7E shows that in this virtual network, the NE 770I is coupled to NE 770D and 770F, which are both still coupled to NE 770E.

Figure 7F illustrates a case where multiple VNEs (VNE 770A. 1 and VNE 770H. 1) are implemented on different NDs (ND 700A and ND 700H) and are coupled to each other, and where the centralized control plane 776 has abstracted these multiple VNEs such that they appear as a single VNE 770T within one of the virtual networks 792 of Figure 7D, according to some embodiments of the invention. Thus, the abstraction of a NE or VNE can span multiple NDs.

While some embodiments of the invention implement the centralized control plane 776 as a single entity (e.g., a single instance of software running on a single electronic device), alternative embodiments may spread the functionality across multiple entities for redundancy and/or scalability purposes (e.g., multiple instances of software running on different electronic devices).

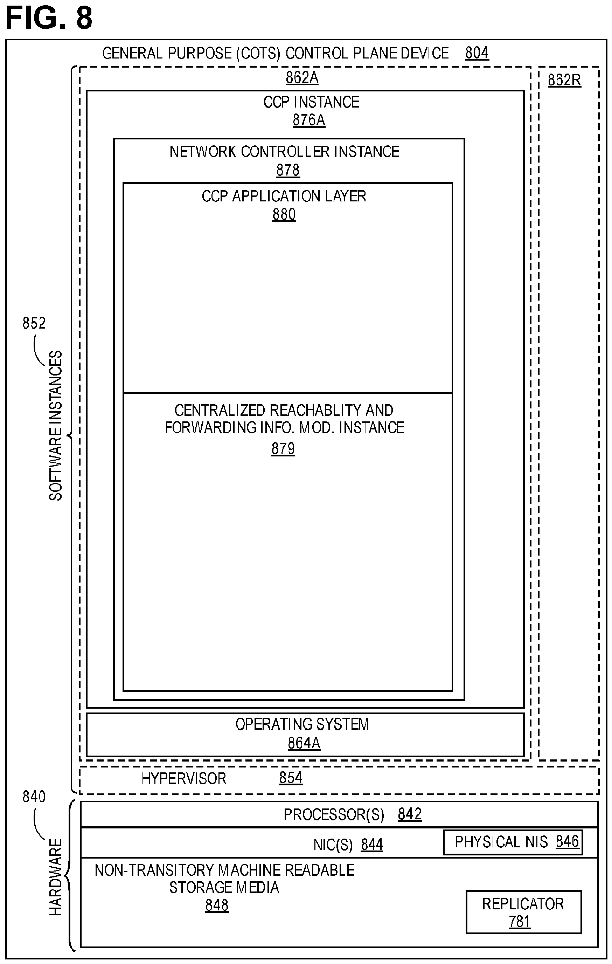

Similar to the network device implementations, the electronic device(s) running the centralized control plane 776, and thus the network controller 778 including the centralized reachability and forwarding information module 779, may be implemented a variety of ways (e.g., a special purpose device, a general-purpose (e.g., COTS) device, or hybrid device). These electronic device(s) would similarly include processor(s), a set or one or more physical NIs, and a non-transitory machine-readable storage medium having stored thereon the centralized control plane software. For instance, Figure 8 illustrates, a general purpose control plane device 804 including hardware 840 comprising a set of one or more processor(s) 842 (which are often COTS processors) and physical NIs 846, as well as non-transitory machine readable storage media 848 having stored therein centralized control plane (CCP) software 850.

In embodiments that use compute virtualization, the processor(s) 842 typically execute software to instantiate a virtualization layer 854 (e.g., in one embodiment the virtualization layer 854 represents the kernel of an operating system (or a shim executing on a base operating system) that allows for the creation of multiple instances 862A-R called software containers (representing separate user spaces and also called virtualization engines, virtual private servers, or jails) that may each be used to execute a set of one or more applications; in another embodiment the virtualization layer 854 represents a hypervisor (sometimes referred to as a virtual machine monitor (VMM)) or a hypervisor executing on top of a host operating system, and an application is run on top of a guest operating system within an instance 862A-R called a virtual machine (which in some cases may be considered a tightly isolated form of software container) that is run by the hypervisor ; in another embodiment, an application is implemented as a unikernel, which can be generated by compiling directly with an application only a limited set of libraries (e.g., from a library operating system (LibOS) including drivers/libraries of OS services) that provide the particular OS services needed by the application, and the unikernel can run directly on hardware 840, directly on a hypervisor represented by virtualization layer 854 (in which case the unikernel is sometimes described as running within a LibOS virtual machine), or in a software container represented by one of instances 862A-R). Again, in embodiments where compute virtualization is used, during operation an instance of the CCP software 850 (illustrated as CCP instance 876A) is executed (e.g., within the instance 862A) on the virtualization layer 854. In embodiments where compute virtualization is not used, the CCP instance 876A is executed, as a unikernel or on top of a host operating system, on the "bare metal" general purpose control plane device 804. The instantiation of the CCP instance 876A, as well as the virtualization layer 854 and instances 862A-R if implemented, are collectively referred to as software instance(s) 852.

In some embodiments, the CCP instance 876A includes a network controller instance 878. The network controller instance 878 includes a centralized reachability and forwarding information module instance 879 (which is a middleware layer providing the context of the network controller 778 to the operating system and communicating with the various NEs), and an CCP application layer 880 (sometimes referred to as an application layer) over the middleware layer (providing the intelligence required for various network operations such as protocols, network situational awareness, and user - interfaces). At a more abstract level, this CCP application layer 880 within the centralized control plane 776 works with virtual network view(s) (logical view(s) of the network) and the middleware layer provides the conversion from the virtual networks to the physical view.

The centralized control plane 776 transmits relevant messages to the data plane 780 based on CCP application layer 880 calculations and middleware layer mapping for each flow. A flow may be defined as a set of packets whose headers match a given pattern of bits; in this sense, traditional IP forwarding is also flow-based forwarding where the flows are defined by the destination IP address for example; however, in other implementations, the given pattern of bits used for a flow definition may include more fields (e.g., 10 or more) in the packet headers. Different NDs/NEs/VNEs of the data plane 780 may receive different messages, and thus different forwarding information. The data plane 780 processes these messages and programs the appropriate flow information and corresponding actions in the forwarding tables (sometime referred to as flow tables) of the appropriate NE/VNEs, and then the NEs/VNEs map incoming packets to flows represented in the forwarding tables and forward packets based on the matches in the forwarding tables.

Standards such as OpenFlow define the protocols used for the messages, as well as a model for processing the packets. The model for processing packets includes header parsing, packet classification, and making forwarding decisions. Header parsing describes how to interpret a packet based upon a well-known set of protocols. Some protocol fields are used to build a match structure (or key) that will be used in packet classification (e.g., a first key field could be a source media access control (MAC) address, and a second key field could be a destination MAC address).

Packet classification involves executing a lookup in memory to classify the packet by determining which entry (also referred to as a forwarding table entry or flow entry) in the forwarding tables best matches the packet based upon the match structure, or key, of the forwarding table entries. It is possible that many flows represented in the forwarding table entries can correspond/match to a packet; in this case the system is typically configured to determine one forwarding table entry from the many according to a defined scheme (e.g., selecting a first forwarding table entry that is matched). Forwarding table entries include both a specific set of match criteria (a set of values or wildcards, or an indication of what portions of a packet should be compared to a particular value/values/wildcards, as defined by the matching capabilities - for specific fields in the packet header, or for some other packet content), and a set of one or more actions for the data plane to take on receiving a matching packet. For example, an action may be to push a header onto the packet, for the packet using a particular port, flood the packet, or simply drop the packet. Thus, a forwarding table entry for IPv4/IPv6 packets with a particular transmission control protocol (TCP) destination port could contain an action specifying that these packets should be dropped.

Making forwarding decisions and performing actions occurs, based upon the forwarding table entry identified during packet classification, by executing the set of actions identified in the matched forwarding table entry on the packet.

However, when an unknown packet (for example, a "missed packet" or a "match-miss" as used in OpenFlow parlance) arrives at the data plane 780, the packet (or a subset of the packet header and content) is typically forwarded to the centralized control plane 776. The centralized control plane 776 will then program forwarding table entries into the data plane 780 to accommodate packets belonging to the flow of the unknown packet. Once a specific forwarding table entry has been programmed into the data plane 780 by the centralized control plane 776, the next packet with matching credentials will match that forwarding table entry and take the set of actions associated with that matched entry.

A network interface (NI) may be physical or virtual; and in the context of IP, an interface address is an IP address assigned to a NI, be it a physical NI or virtual NI. A virtual NI may be associated with a physical NI, with another virtual interface, or stand on its own (e.g., a loopback interface, a point-to-point protocol interface). A NI (physical or virtual) may be numbered (a NI with an IP address) or unnumbered (a NI without an IP address). A loopback interface (and its loopback address) is a specific type of virtual NI (and IP address) of a NE/VNE (physical or virtual) often used for management purposes; where such an IP address is referred to as the nodal loopback address. The IP address(es) assigned to the NI(s) of a ND are referred to as IP addresses of that ND; at a more granular level, the IP address(es) assigned to NI(s) assigned to a NE/VNE implemented on a ND can be referred to as IP addresses of that NE/VNE.

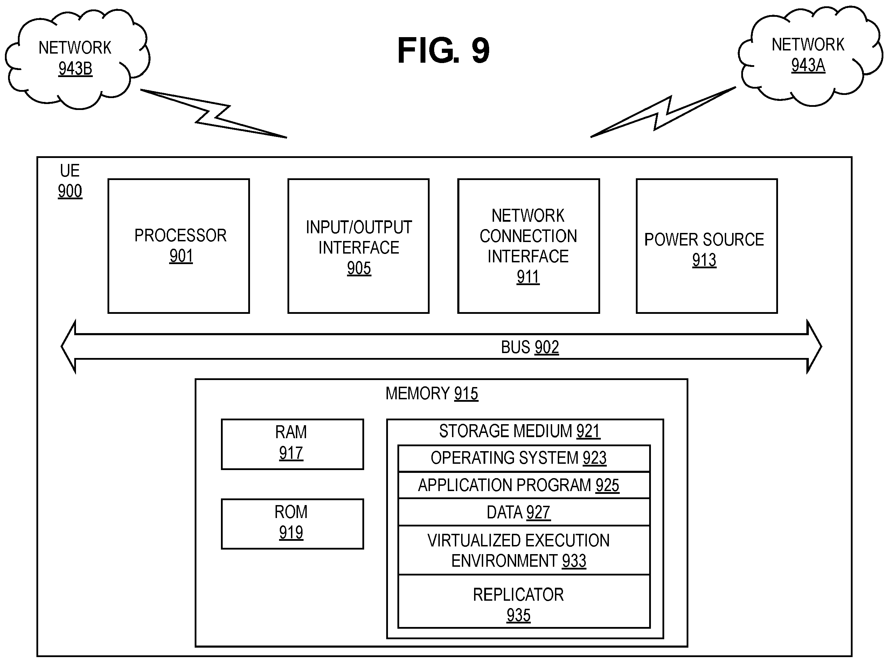

Figure 9 is a diagram illustrating an example embodiment of an electronic device implementing a discovery replicator in a virtualized execution environment. Electronic device 900 includes a set of processors 901 that is operatively coupled to input/output interface 905, network connection interface 911, memory 915 including random access memory (RAM) 917, read-only memory (ROM) 919, and storage medium 921 and similar components. The electronic device 900 can further include power source 913, and/or any other component, or any combination thereof to implement a server or similar electronic device. Storage medium 921 includes operating system 923, application programs 925, virtualized execution environment 933, replicator 935, and data 927. In other embodiments, storage medium 921 may include other similar types of information. Certain electronic devices 900 may utilize all of the components shown in Figure 9, or only a subset of the components. The level of integration between the components may vary from one electronic device to another. Further, certain electronic devices may contain multiple instances of a component, such as multiple processors, memories, transceivers, transmitters, receivers, etc.

In Figure 9, processor 901 may be configured to process computer instructions and data. Processor 901 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, together with appropriate software; or any combination of the above. Data may be information in a form suitable for use by a computer.

In the depicted embodiment, input/output interface 905 may be configured to provide a communication interface to an input device, output device, or input and output device. Electronic device 900 may be configured to use an output device via input/output interface 905. An output device may use the same type of interface port as an input device. For example, a USB port may be used to provide input to and output from electronic device 900. The output device may be a speaker, a sound card, a video card, a display, a monitor, a printer, an actuator, an emitter, a smartcard, another output device, or any combination thereof. Electronic device 900 may be configured to use an input device via input/output interface 905 to allow a user to capture information into electronic device 900. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user.

Network connection interface 911 may be configured to provide a communication interface to network 943A. Network 943A may encompass wired and/or wireless networks such as a local-area network (LAN), a wide-area network (WAN), a computer network, a wireless network, a telecommunications network, another like network or any combination thereof. For example, network 943A may comprise a Wi-Fi network. Network connection interface 911 may be configured to include a receiver and a transmitter interface used to communicate with one or more other devices over a communication network according to one or more communication protocols, such as Ethernet, TCP/IP, SONET, ATM, or the like. Network connection interface 911 may implement receiver and transmitter functionality appropriate to the communication network links (e.g., optical, electrical, and the like). The transmitter and receiver functions may share circuit components, software or firmware, or alternatively may be implemented separately.

RAM 917 may be configured to interface via bus 902 to processor 901 to provide storage or caching of data or computer instructions during the execution of software programs such as the operating system, application programs, and device drivers. ROM 919 may be configured to provide computer instructions or data to processor 901. For example, ROM 919 may be configured to store invariant low-level system code or data for basic system functions such as basic input and output (I/O), startup, or reception of keystrokes from a keyboard that are stored in a non-volatile memory. Storage medium 921 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 921 may be configured to include operating system 923, application program 925 such as a web browser application, a widget or gadget engine or another application, and data 927. Storage medium 921 may store, for use by electronic device 900, any of a variety of various operating systems or combinations of operating systems.

Storage medium 921 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 921 may allow electronic device 900 to access computer-executable instructions, application programs or the like, stored on transitory or non-transitory memory media, to off-load data, or to upload data. An article of manufacture, such as one utilizing a communication system may be tangibly embodied in storage medium 921, which may comprise a device readable medium. The storage medium 921 can store therein the code or instructions for execution of the virtualized execution environment 933 and the replicator 935.

Power source 913 may be configured to provide alternating current (AC) or direct current (DC) power to components of the electronic device 900.

The features, benefits and/or functions described herein may be implemented in one of the components of the electronic device 900 or partitioned across multiple components of the electronic device 900.

While the invention has been described in terms of several embodiments, those skilled in the art will recognize that the invention is not limited to the embodiments described, can be practiced with modification and alteration within the scope of the appended claims The description is thus to be regarded as illustrative instead of limiting.

## Claims

1. A method implemented by an electronic device to enable discovery of real-time publish-subscribe protocol (RTPS) participant nodes in a virtual execution environment that does not support multicast, the method comprising:
receiving (401) a real-time publish-subscribe (RTPS) protocol packet;
updating a current participant list;
determining (405) the current participant list from a participant list updater;
sending (411) a copy of a payload of the RTPS protocol packet to a participant in the current participant list, in response to determining the participant did not originate the RTPS protocol packet,
wherein updating the current participant list comprises one of the following:
updating (505) the current participant list to add a metadata locator from the RTPS protocol packet, the metadata locator including an Internet Protocol address and port number; or
updating (513) the current participant list to add a source Internet Protocol address of the RTPS packet; or
updating (517) the current participant list by polling the virtual execution environment to obtain participant information.

2. The method of claim 1, further comprising:
checking (413) that the payload is replicated and sent to each participant identified in the participant list before completing.

3. The method of claim 1, wherein the virtual execution environment is a Kubernetes cluster.

4. A machine-readable medium comprising computer program code which when executed by a computer carries out the method steps of any of claims 1-3.

5. An electronic device to implement the method of any of claims 1-3.

## Patentansprüche

1. Verfahren, das von einer elektronischen Vorrichtung implementiert wird, zum Ermöglichen der Erkennung von Echtzeit-Publish-Subscribe-(RTPS-)Protokollteilnehmerknoten in einer virtuellen Ausführungsumgebung, die kein Multicast unterstützt, wobei das Verfahren umfasst:
Empfangen (401) eines Echtzeit-Publish-Subscribe-(RTPS-)Protokollpakets;
Aktualisieren einer aktuellen Teilnehmerliste;
Bestimmen (405) der aktuellen Teilnehmerliste aus einem Teilnehmerlisten-Updater;
Senden (411) einer Kopie der Nutzlast des RTPS-Protokollpakets an einen Teilnehmer in der aktuellen Teilnehmerliste in Reaktion auf ein Bestimmen dessen, dass der Teilnehmer nicht das RTPS-Protokollpaket erstellt hat,
wobei das Aktualisieren der aktuellen Teilnehmerliste eines von Folgendem umfasst:
Aktualisieren (505) der aktuellen Teilnehmerliste, um einen Metadaten-Locator aus dem RTPS-Protokollpaket hinzuzufügen, wobei der Metadaten-Locator eine Internetprotokolladresse und eine Portnummer umfasst; oder
Aktualisieren (513) der aktuellen Teilnehmerliste, um eine Internetprotokoll-Quelladresse des RTPS-Pakets hinzuzufügen; oder Aktualisieren (517) der aktuellen Teilnehmerliste durch Abfragen der virtuellen Ausführungsumgebung, um Teilnehmerinformationen zu erhalten.

2. Verfahren nach Anspruch 1, ferner umfassend:
Prüfen (413), ob die Nutzlast repliziert und an jeden in der Teilnehmerliste identifizierten Teilnehmer gesendet wird, vor der Durchführung.

3. Verfahren nach Anspruch 1, wobei die virtuelle Ausführungsumgebung ein Kubernetes-Cluster ist.

4. Maschinenlesbares Medium, umfassend Computerprogrammcode, der bei Ausführung durch einen Computer die Verfahrensschritte nach einem der Ansprüche 1 bis 3 ausführt.

5. Elektronische Vorrichtung zum Implementieren des Verfahrens nach einem der Ansprüche 1 bis 3.

## Revendications

1. Procédé mis en oeuvre par un dispositif électronique pour permettre une découverte de noeuds participants de protocole de publication-abonnement en temps réel (RTPS) dans un environnement d'exécution virtuel ne prenant pas en charge la multidiffusion, le procédé comprenant :
la réception (401) d'un paquet de protocole de publication-abonnement en temps réel (RTPS) ;
la mise à jour d'une liste de participants courante ;
la détermination (405) de la liste de participants courante à partir d'un dispositif de mise à jour de liste de participants ;
l'envoi (411) d'une copie d'une charge utile du paquet de protocole RTPS à un participant dans la liste de participants courante, en réponse à la détermination que le participant n'est pas à l'origine du paquet de protocole RTPS,
dans lequel la mise à jour de la liste de participants courante comprend l'une parmi :
la mise à jour (505) de la liste de participants courante pour ajouter un localisateur de métadonnées à partir du paquet de protocole RTPS, le localisateur de métadonnées incluant une adresse et un numéro de port de protocole Internet ; ou
la mise à jour (513) de la liste de participants courante pour ajouter une adresse de protocole Internet source du paquet RTPS ; ou
la mise à jour (517) de la liste de participants courante par l'interrogation de l'environnement d'exécution virtuel pour obtenir des informations de participants.

2. Procédé selon la revendication 1, comprenant en outre :
la vérification (413) que la charge utile est répliquée et envoyée à chaque participant identifié dans la liste de participants avant l'achèvement.

3. Procédé selon la revendication 1, dans lequel l'environnement d'exécution virtuel est un cluster Kubernetes.

4. Support lisible par machine comprenant un code de programme informatique qui, lorsqu'il est exécuté par un ordinateur, réalise les étapes du procédé selon l'une quelconque des revendications 1 à 3.

5. Dispositif électronique pour mettre en oeuvre le procédé selon l'une quelconque des revendications 1 à 3.
